# EUROPÄISCHE PATENTANMELDUNG

(11) **EP 1 350 670 A2**
(43) Veröffentlichungstag der Anmeldung: **08.10.2003**
(21) Anmeldenummer: 03100563.0
(22) Anmeldetag: 07.03.2003
(51) Int. Cl.: B60Q 1/076, H02K 1/14

(54) **Vorrichtung zum Antrieb der Blendewelle eines Scheinwerfers**

(30) Priorität: 28.03.2002 DE 2103954
(71) Anmelder: Hella KG Hueck & Co., 59552 Lippstadt (DE)
(72) Erfinder: Abel, Björn, 59590 Geseke (DE); Cybaier, Mark, 59555, Lippstadt (DE)

(57) **Zusammenfassung**

Aktuator zur Ansteuerung einer Blendenwelle für einen Scheinwerfer, mit einem Aktuator, der einen Rotor und einen sich koaxial zu demselben erstreckenden Stator mit einer Anzahl von Erregerwicklungen aufweist, wobei der Aktuator als Rotationsaktor ausgebildet ist, wobei durch Schalten der Erregerwicklungen des Stators mit einem mehrstufigen Schalter der Rotor in eine vorgegebene Drehposition bringbar ist. Der Aktuator weist einen Stator auf, der durch eine Anzahl von in axialer Richtung nebeneinander angeordneter Wicklungsblöcke gebildet ist. Jeder Wicklungsblock weist ein ringförmiges Joch auf, auf dem eine ringförmige Spule angeordnet ist. Zusätzlich weist der Wicklungsblock jeweils zwei gegenüberliegende ringförmige Erregerschuhe auf, die als Erregungspole dienen.

## Beschreibung

Die Erfindung betrifft einen Aktuator zur Ansteuerung einer Welle, insbesondere einer Blendenwelle für einen Scheinwerfer, der einen Rotor und einen sich koaxial zu demselben erstreckenden Stator mit einer Anzahl von Erregerwicklungen aufweist.

Aus der DE 197 39 089 A1 ist ein Scheinwerfer für Fahrzeuge bekannt, der zur Einstellung unterschiedlicher Lichtfiguren eine Blendenwelle aufweist, die um eine horizontale und quer zur optischen Achse verlaufende Drehachse in mehrere Drehstellungen verstellbar gelagert ist. Für jede Drehstellung, die zu einer vorgegebenen Lichtfigur korrespondiert, bildet eine Mantelfläche der Blendenwelle eine Brennlinie zur Erzeugung einer Hell-Dunkel-Grenze. Hierdurch kann beispielsweise eine Lichtfigur für Schlechtwetterlicht, Abblendlicht, Autobahnlicht erzeugt werden. Die Blendenwelle bildet somit eine Welle zur Einstellung einer vorgegebenen Lichtfigur. Der bekannte Scheinwerfer weist als Aktuator für diese Welle einen Schrittmotor auf, durch welchen die Blendenwelle in die entsprechenden Drehstellungen bringbar ist. Zusätzlich weist der Scheinwerfer als Aktuator einen Linearmotor auf, der darüber hinaus die Blendenwelle translatorisch verstellen kann. Nachteilig an dem bekannten Aktuator zur Erzeugung einer Drehbewegung ist, dass eine komplexe Ansteuerelektronik erforderlich ist, die einen relativ hohen Aufwand bedeutet, denn es ist erforderlich, dem Schrittmotor einen Antriebsstrom zuzuführen. Weiterhin ist zum diskontinuierlichen Einschalten des Antriebsstromes ein Pulssignal erforderlich. Um den Schrittmotor schrittweise zu betreiben, ist es ferner erforderlich, das Pulssignal mit einem Steuersignal zu synchronisieren.

Aufgabe der vorliegenden Erfindung ist es, einen Aktuator derart weiterzubilden, dass auf einfache und kostengünstige Weise eine rotatorische Positionierung einer Welle in vorgegebenen Drehpositionen gewährleistet wird.

Zur Lösung dieser Aufgabe ist die Erfindung dadurch gekennzeichnet, dass der Aktuator als Rotationsaktor ausgebildet ist, wobei der Rotor durch direktes Schalten der Erregerwicklungen des Stators in eine vorgegebene Drehposition bringbar ist.

Der besondere Vorteil der Erfindung besteht darin, dass durch die Ausbildung des Aktuators als Rotationsaktor lediglich ein Ein- oder Umschalten der Erregerwicklungen eines Stators erforderlich sind, um eine vorgegebene Drehposition des Rotors zu ermöglichen. Vorteilhaft kann auf eine recht komplexe Ansteuerelektronik verzichtet werden. Lediglich ein mehrstufiger Schalter ist mit dem Rotationsaktor durch eine elektrische Leitung verbunden, wobei jeder Schaltposition eine bestimmte Drehposition zugeordnet ist.

Nach einer bevorzugten Ausführungsform bildet der elektrische Schalter ein ortsfern angeordnetes Bedienteil, so dass mit schaltungstechnisch geringem Aufwand eine Verstellung des Rotationsaktors ermöglicht wird. Bei Einsatz des Rotationsaktors im Scheinwerfer kann das Bedienteil in dem Cockpit des Fahrzeugs angeordnet sein.

Nach einer Weiterbildung der Erfindung weist der Rotationsaktor einen Stator auf, der durch eine Anzahl von in axialer Richtung nebeneinander angeordneter Wicklungsblöcke gebildet ist. Jeder Wicklungsblock weist ein ringförmiges Joch auf, auf dem eine ringförmige Spule angeordnet ist. Zusätzlich weist der Wicklungsblock jeweils zwei gegenüberliegende ringförmige Erregerschuhe auf, die als Erregungspole dienen. Auf diese Weise kann vorteilhaft eine Magnetfeldumlenkung aus der axialen Richtung in eine radiale Richtung umgelenkt werden. Das wirksame magnetische Feld ist somit senkrecht zum Rotor angeordnet.

Weitere Vorteile der Erfindung ergeben sich aus den Unteransprüchen.

Ein Ausführungsbeispiel der Erfindung wird nachfolgend anhand der Zeichnungen näher erläutert.

Es zeigen:
- Figur 1: eine perspektivische Vorderansicht eines Scheinwerfers mit einem Aktuator für eine als Blendwelle ausgebildete Welle,
- Figur 2: eine Explosionsdarstellung eines Stators des Aktuators mit einem schematisch durch Strichlinien angedeuteten Rotor,
- Figur 3: einen Schaltplan für einen elektrischen Schalter zur Einstellung von vier unterschiedlichen Drehpositionen der Welle und
- Figur 4: einen Schaltplan für einen elektrischen Schalter zur Einstellung von acht unterschiedlichen Drehpositionen der Welle.

Die Erfindung findet Anwendung für die Einstellung einer Welle in einem Scheinwerfer, dessen Ausführungsbeispiel im Folgenden beschrieben wird. Alternativ kann die Erfindung auch zur Ansteuerung von anderen Wellen im Fahrzeug eingesetzt werden, wie beispielsweise zur Ansteuerung eines Klappenstellers für Luftmengenregler einer Heizungs-/Klimaanlage oder für eine Sitzverstellung. Die Erfindung ist für jede Anwendung sinnvoll einsetzbar, in der es um die rotatorische Verstellung in diskrete Drehpositionen geht.

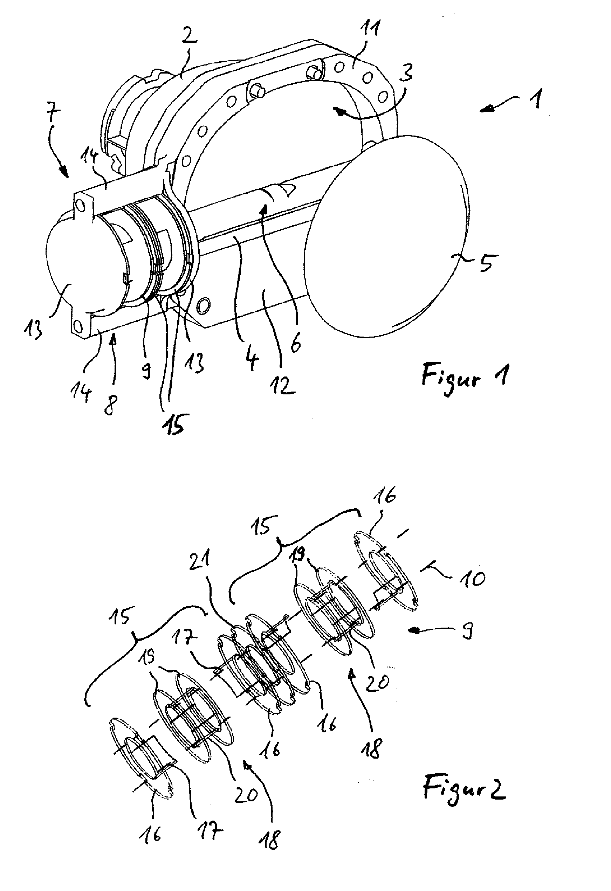

Nach einem vorliegenden Ausführungsbeispiel gemäß Figur 1 bis 4 ist ein Scheinwerfer 1 vorgesehen, der im wesentlichen aus einem Gehäuse 2, in dem ein Reflektor 3 und eine nicht dargestellte Lichtquelle gelagert ist, einer dem Reflektor 3 in Lichtaustrittsrichtung vorgelagerte Blendenwelle 4 und einer derselben nachgeordneten Lichtscheibe 5 besteht. Die Lichtquelle ist als Gasentlandungslampe ausgebildet, die in dem inneren Brennort des ellipsoidförmigen Reflektors 3 angeordnet ist. Die Blendenwelle 4 weist in Umfangsrichtung gleichmäßig verteilte Brennlinien 6 auf, die im Zusammenwirken mit der Lichtquelle, dem Reflektor 3 und der Lichtscheibe 5 eine vorgegebene Lichtfigur erzeugt. Beispielsweise kann die Blendenwelle 4 vier um 90° versetzt angeordnete Brennlinien 6 aufweisen, die eine Hell-Dunkel-Grenze für Abblendlicht, Fernlicht, Autobahnlicht und Schlechtwetterlicht erzeugen.

Zur Verstellung der Blendenwelle 4 in vorgegebene vier Drehpositionen ist die Blendenwelle 4 mit einem als Rotationsaktor 7 ausgebildeten Aktuator verbunden. Der Rotationsaktor 7 erstreckt sich in axialer Verlängerung der Blendenwelle 4 an einer Seite des Gehäuses 2. Der Rotationsaktor 7 weist einen rahmenförmigen Träger 8 auf zur Halterung eines Stators 9 und eines Rotors 10. Der Rotor 10 ist als Permanentmagnet ausgebildet und erstreckt sich koaxial zum Stator 9 innerhalb desselben. Der Rotor 10 ist drehfest mit der Blendenwelle 4 verbunden.

Der Träger 8 des Rotationsaktors 7 ist einstückig mit einem Blendrahmen 11 verbunden, der sich entlang eines vorderen Randes des Gehäuses 2 bzw. des Reflektors 3 erstreckt. Der Blendrahmen 11 weist eine Abdeckfläche 12 auf, die den Bereich der Gehäuseöffnung unterhalb der Blendenwelle 4 vollständig abdeckt. Der Träger 8 wird durch zwei die Stirnseiten des Rotationsaktors 7 abdeckende Stirnflächen 13 gebildet, die über zwei gegenüberliegende Verbindungsstege 14 miteinander verbunden sind.

Der Stator 9 weist zwei in axialer Richtung nebeneinander angeordnete Wicklungsblöcke 15 auf, die jeweils ein ringförmiges Joch 16 bilden zur Aufnahme einer ringförmigen Spule. Wie besser aus Figur 2 zu ersehen ist, weist jeder Wicklungsblock 15 zwei gegenüberliegende ringförmige Erregerschuhe 17 auf, die als Erregungspole dienen. Die ringförmigen Joche 16 bzw. Erregerschuhe 17 sind aus einem magnetisch leitenden Material gefertigt und sind derart über eine Zwischenhülse 18 zueinander ausgerichtet, dass die Erregerschuhe 17 um 180° versetzt zueinander angeordnet sind (gegenüberliegend ausgerichtet). Auf diese Weise wird das durch die auf dem ringförmigen Joch 16 aufliegende Spule gebildete Magnetfeld aus einer axialen Richtung in eine radiale Richtung umgelenkt. Der Stator 9 ist segmentartig aus zwei Wicklungsblöcken 15 zusammengesetzt.

Die Zwischenhülse 18 weist zwei in axialer Richtung zueinander beabstandte Ringflächen 19 auf, deren lichter Abstand die Spulenlänge vorgibt. Eine Mantelfläche 20 der Zwischenhülse 18 weist in einem solchen Bereich Aussparungen auf, in dem die Erregerschuhe 17 der ringförmigen Joche 16 eingreifen sollen.

Wie aus Figur 2 zu ersehen ist, sind die beiden Wicklungsblöcke 15 gleichartig ausgebildet. Sie werden jeweils unter Zwischensetzung der isolierenden Zwischenhülse 18 zusammengesetzt, dann unter Anlage an einer gemeinsamen isolierenden Trennringscheibe 21 auf den Rotor 10 geschoben und derart ausgerichtet, dass die gedachte Verbindungslinie zwischen zwei gegenüberliegenden Erregerschuhen 17 des einen Wicklungsblocks 15 um 90° versetzt zu der gedachten Verbindungslinie zwischen zwei ringförmigen Erregerschuhen 17 des anderen Wicklungsblocks 15 orientiert sind. Nachfolgend werden die Wicklungsblöcke 15 durch kraftschlüssiges Befestigen der äußeren Stirnfläche 13 festgelegt. Es liegen somit vier um 90° in Umfangsrichtung versetzt angeordnete Erregerschuhe 17 vor, die bei entsprechender Beaufschlagung der Spulen mit Strom ein um 90° versetztes Magnetfeld erzeugen. Jede Spule eines Wicklungsblocks 15 erzeugt somit ein um 180° räumlich versetzt angeordnetes Magnetfeld.
Zur Erzeugung von vier um 90° versetzt angeordneten Drehpositionen des Rotors 10 bzw. der Blendenwelle 4 ist ein elektrischer Schalter 22 mit den Anschlüssen der auf den Wicklungsblöcken 15 angeordneten ersten Spule 23 und zweiten Spule 24 verbunden, wie aus Figur 3 zu ersehen ist. Der elektrische Schalter 22 ist Bestandteil eines Bedienteils, das ortsfern von dem Rotationsaktor 7 angeordnet sein kann. Über den elektrischen Schalter 22 sind die Spulen 23, 24 mit einer elektrischen Spannungsquelle des Fahrzeugs verbunden.

Wie aus Figur 3 besser zu ersehen ist, ermöglicht der mehrstufige Schalter 22, dass die Anschlüsse der Spule 23 und 24 derart miteinander kombiniert werden, dass sich an den vier Erregerschuhen 17 der beiden Wicklungsblöcke 15 unterschiedlich orientierte Magnetfelder einstellen. Unter Einwirkung dieser unterschiedlichen Magnetfelder stellt sich der Rotor 10 in eine vorgegebene Drehposition ein. Der vierstufige Schalter 22 ermöglicht somit die Einstellung von vier unterschiedlichen Drehpositionen. Beispielsweise bewirkt die oberste Stellung 25 des Schalters, dass der Anschluss A der ersten Spule 23 und der Anschluss A' der zweiten Spule 24 am Pluspol der Spannungsquelle 26 und der Anschluss B bzw. B' der ersten Spule 23 bzw. der zweiten Spule 24 an den Minuspol der Spannungsquelle 26 angeschlossen sind. Durch Weiterschaltung des Schalters 22 lassen sich die drei weiteren Schaltkombinationen dieser Anschlüsse A, B, A', B' einstellen.

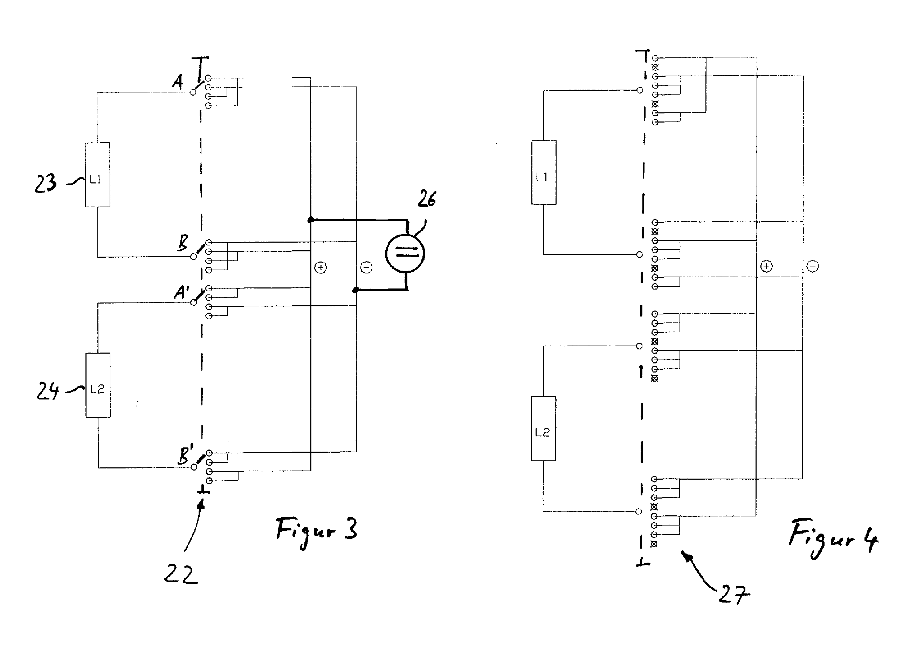

Nach einer nicht dargestellten alternativen Ausführungsform kann der Rotationsaktor 7 um zwei Wicklungsblöcke 15 erweitert werden, so dass ein achtstufiger Schalter 27 nach Figur 4 anschließbar ist, der acht unterschiedliche Drehpositionen einzustellen in der Lage ist. Der Rotor 10 ist somit in Drehwinkelstufen von 45° einstellbar.

Damit bei Stromausfall die Blendenwelle 4 wieder in eine vorgegebene Drehposition, in der beispielsweise eine Abblendlichtfunktion gebildet wird, verschwenken kann, ist dieselbe über eine nicht dargestellte Rückstellfeder mit dem Gehäuse 2 gekoppelt.

Nach einer Ausführungsform kann eine Haltestromschaltung vorgesehen sein die die vorgegebene Schaltstellung sichert und eine Entlastung des elektrischen Schalters 22 bewirkt.

## Patentansprüche

1. Aktuator zur Ansteuerung einer Welle, insbesondere einer Blendenwelle für einen Scheinwerfer, der einen Rotor und einen sich koaxial zu demselben erstreckenden Stator mit einer Anzahl von Erregerwicklungen aufweist, **dadurch gekennzeichnet, dass** der Aktuator als Rotationsaktor (7) ausgebildet ist, wobei der Rotor (10) durch direktes Schalten der Erregerwicklungen des Stators (9) in eine vorgegebene Drehposition bringbar ist.

2. Aktuator nach Anspruch 1, **dadurch gekennzeichnet, dass** der Rotationsaktor (7) lediglich über einen einzigen mehrstufigen elektrischen Schalter (22) eines ortsfern angeordneten Bedienteils mit einer elektrischen Spannungsquelle (26) des Fahrzeugs verbunden ist.

3. Aktuator nach Anspruch 1 oder 2, **dadurch gekennzeichnet, dass** jeder Schaltstellung des elektrischen Schalters (22) eine vorgegebene Drehposition des Rotors (10) zugeordnet ist.

4. Aktuator nach einem der Ansprüche 1 bis 3, **dadurch gekennzeichnet, dass** der Stator (9) eine Anzahl von in axialer Richtung angeordnete Wicklungsblöcke (15) aufweist, wobei jeder Wicklungsblock (15) einen ringförmiges Joch (16) aufweist, auf dem die ringförmige Erregerwicklung angeordnet ist.

5. Aktuator nach einem der Ansprüche 1 bis 4, **dadurch gekennzeichnet, dass** der Wicklungsblock (15) jeweils zwei gegenüberliegende ringförmige Erregerschuhe (17) aufweist, die als Erregungspole dienen.

6. Aktuator nach einem der Ansprüche 1 bis 5, **dadurch gekennzeichnet, dass** die Anzahl der Wicklungsblöcke (15) der halben Anzahl der vorgegebenen Drehpositionen des Rotors (10) entspricht.

7. Aktuator nach einem der Ansprüche 1 bis 6, **dadurch gekennzeichnet, dass** der Rotor (10) drehfest mit der Welle (4) verbunden ist.

8. Aktuator nach einem der Ansprüche 1 bis 7, **dadurch gekennzeichnet, dass** der Stator (9) segmentartig aus einer Mehrzahl von ineinandersteckbaren Teilen (16, 17, 18, 21) gebildet ist.

9. Aktuator nach einem der Ansprüche 1 bis 8, **dadurch gekennzeichnet, dass** die Welle als eine Blendenwelle (4) eines Scheinwerfers ausgebildet ist, die mit einer im zentralen Bereich eines Reflektors angeordneten Lichtquelle zusammenwirkt.

10. Aktuator nach einem der Ansprüche 1 bis 9, **dadurch gekennzeichnet, dass** die Blendenwelle (4) oder der Rotor (10) mit einer Rückstellfeder verbunden sind, derart, dass bei Ausfall der Spannungsversorgung die Blendenwelle (4) in eine vorgegebene Drehposition verdrehbar ist.
